Europäisches Patentamt

(19) European Patent Office

Office européen des brevets

(11) Publication number: **0 061 847**

**A1**

(12) **EUROPEAN PATENT APPLICATION**

(21) Application number: **82301164.8**

(22) Date of filing: **08.03.82**

. (51) Int. Cl.³: **F 16 D 13/72**

(30) Priority: **31.03.81 GB 8110383**

(43) Date of publication of application:
**06.10.82 Bulletin 82/40**

(84) Designated Contracting States:
**BE DE FR GB IT SE**

(71) Applicant: **AUTOMOTIVE PRODUCTS PUBLIC LIMITED
COMPANY
Tachbrook Road
Leamington Spa Warwickshire CV31 3ER(GB)**

(72) Inventor: **Bainbridge, Wilfred Nicholas
"Staddle Stones" Overthorpe
Banbury Oxon(GB)**

(74) Representative: **Adkins, Michael et al,
Withers & Rogers 4 Dyer's Buildings
Holborn London, EC1N 2JT(GB)**

(54) **A friction clutch pressure plate.**

(57) The friction clutch annular pressure plate has a friction surface 12 for engagement with a friction disc 3 and a back face 13 for engagement with a clutch spring 14. The back face 13 carries an array of knobs 17 which project therefrom and which effectively increase the surface area of the back face. In use, air passes over the knobs to cool the pressure plate.

FIG. 2.

# A FRICTION CLUTCH PRESSURE PLATE

This invention relates to a friction clutch pressure plate particularly, but not exclusively, for use in a motor vehicle friction clutch.

Friction clutches on motor vehicles generally include a friction disc which drives the transmission and which is clamped between the flywheel of an internal combustion engine and a clutch pressure plate. A problem associated with friction clutches is that during clutch take-up when the vehicle is moving off from a standing start, particularly at periods of high engine torque demand e.g. a hill start, or when the vehicle is towing a caravan, the friction clutch is allowed to slip during clutch engagement. This relative rubbing movement between the friction disc and friction surfaces on the vehicle flywheel and pressure plate cause a large amount of heat to be generated.

It is undesirable to allow the friction material of the friction disc to become 'too hot. This is because the friction material generally comprises asbestos fibre bound by a phenolic resin and temperatures in excess of $300^{o}C$ can cause a rapid breakdown of the organic binder.

The present invention provides a pressure plate for the rapid dissipation of heat.

Accordingly there is provided a friction clutch annular pressure plate having a friction surface for engagement with a friction disc, and a back face for engagement with a clutch spring characterised in that there is an array of knobs projecting from the back face.

The provision of an array of knobs on the back face of the pressure plate effectively increases the surface area of the back face so that air drawn into a bell housing of the clutch can pass over the knobs and cool the pressure plate.

The knobs may be arranged in groups which effectively form vanes. In such a case each group may comprise a number of radially aligned knobs.

An example of the invention will now be described with reference to the accompanying drawings in which:-

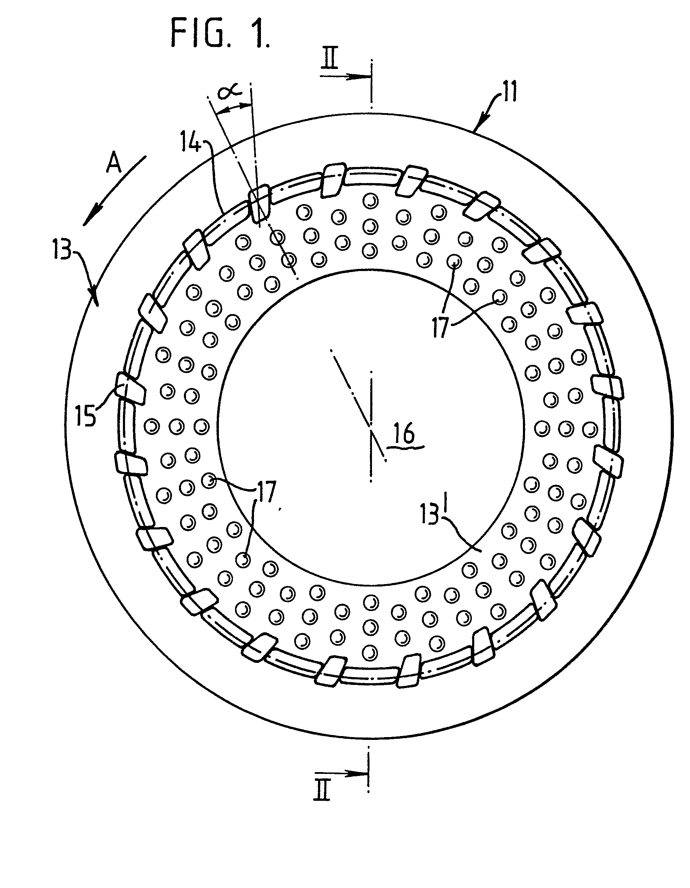

Fig. 1 is a plan view of an automobile friction clutch pressure plate,

Fig. 2 is a cross section through the pressure plate of Fig. 1 on the line II-II of Fig. 1, and

Fig. 3 is a cross section through one of the knobs . on the pressure plate.

An annular cast iron pressure plate 11, has a friction surface 12 for engagement with a friction disc in the form of a clutch driven plate 3 (see broken lines in Fig. 2) and a back face 13 including an annular boss 14 for

6.    A friction clutch annular pressure plate according to claim 5 characterised in that the passages defined by cut-outs (15) are inclined to the radial direction.


7.    A friction clutch annular pressure plate according to any preceding
      characterised
claim/in that   each knob (17) is substantially semi-elliptial in cross section with its major axis (M) perpendicular to the inner margin (13') of the back

face (13).

0061847

1 / 2

FIG. 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 066 850 (CAW) *Page 3, lines 81-97; figures 1,2* | 1,3,5 | F 16 D 13/72 |
| A | US-A-2 541 611 (REED) *Column 3, lines 18-19; figure 1* | 1 | |
| A | GB-A-1 090 622 (COUNTY) | | |
| A | US-A-2 742 129 (PALM) | | |
| A | US-A-3 648 814 (BARRON) | | |
| A | FR-A-2 418 378 (B.M.W.) | | |

---

TECHNICAL FIELDS SEARCHED (Int. Cl. ³)

F 16 D

The present search report has been drawn up for all claims

| Place of search | Date of completion of the search | Examiner |
|---|---|---|
| THE HAGUE | 29-06-1982 | ORTHLIEB CH.E. |